# EUROPEAN PATENT APPLICATION

(11) **EP 2 779 793 A2**
(43) Date of publication of application: **17.09.2014**
(21) Application number: 14157713.0
(22) Date of filing: 04.03.2014
(51) Int. Cl.: H05B 33/08, H05K 9/00, F21K 99/00

(54) **Lighting apparatus with device for protection against electrostatic discharges for led modules**

(30) Priority: 06.03.2013 IT MI20130338
(71) Applicant: E.R.C. Highlight S.r.l., 23081 Calolziocorte (Lecco) (IT)
(72) Inventor: Arrigoni, Carlo, 23081 Calolziocorte (Lecco) (IT); Ferrando, Giuseppe, 23081 Calolziocorte (Lecco) (IT); Vedani, Silvio, 23081 Calolziocorte (Lecco) (IT)
(74) Representative: Petruzziello, Aldo

(57) **Abstract**

An LED (Light Emitting Diode) lighting apparatus (12), without earthing connection comprising an LED power supply (14), an LED module (16) with a heat sink (22) and a device (10, 10', 10") for protection against electrostatic discharges suitable for allowing the dispersion of electrostatic charge that can accumulate on the metal surface of the lighting apparatus and/or on the heat sink (22) connected or integrated with said LED module, while at the same time maintaining the safety/insulation requirements of the system, said device being connected in an intermediate position between said LED power supply (14) and said LED module (16) or being integrated in the LED power supply (14) or being integrated in the LED module (16) of said lighting apparatus.

## Description

The object of the present invention is a lighting apparatus with device for protection against electrostatic discharges for LED (Light Emitting Diode) modules.

More particularly the present invention relates to a lighting apparatus without earthing connection, comprising a device for protection against electrostatic discharges for LED modules, specially suitable for being used for LED lighting devices with the function of allowing the dispersion of electrostatic charge that can accumulate between the metal surface of the lighting apparatus and/or the heat sink, so as to prevent an unfortunate breakage or damage of the LED and/or of the output stage of the power supply.

As is known, LEDs are semiconductor devices which generate light, neutral or coloured, at the passage of electrical charges in an appropriately doped silicon junction and at present are increasingly frequently used for the production of lighting devices for both external and internal environments, for the automotive sector and the like, due to their high flexibility of use and the multiple advantages which they have compared to traditional lighting sources such as, for example, fluorescent or incandescent lamps. LEDs in fact ensure higher efficiency compared to traditional lighting sources, light up instantaneously without a transient period and have a decidedly longer working life.

In these lighting devices the LEDs can be placed in series or in parallel and organised according to different geometric configurations as a function of the specific lighting and circuit needs.

However LEDs have some disadvantages linked to the dissipation of heat. LEDs, in fact, unlike what occurs with fluorescent or incandescent lamps, in order to dissipate the heat which develops in the junction, potentially damaging for the good optical and electrical functioning, are provided with a heat sink element or cooler defined by a metal plate typically in aluminium where to a further dissipation device can be associated comprising a plurality of fins having the function of multiplying the dissipation surface and therefore the capacity for heat exchange with the environment and are insulated galvanically from these heat dissipation elements.

Traditionally this sink is a component forming part of the external surface of the container of the LED lighting sources or is electrically coupled to the same.

Especially but not exclusively in the case of a use of LEDs for systems of lighting of outside areas, the lighting apparatuses are without earthing connection and are assembled with LED power supplies provided with galvanic insulation between the primary circuits connected to the network and the secondary circuits connected to the LED load (as required by current standards) and have an LED power supply which receives current from the public distribution network with the line wire (typically denoted by L) and with the neutral (N) and which, by means of a suitable output, supplies the LEDs or the LED module which is provided with insulation with respect to the network (galvanic insulation).

However in these cases some disadvantages may appear linked to an accumulation of charges through electrostatic effect on the sink and/or on the outer surface of the element containing the LED lighting apparatus.

A high difference of potential developed between the sink and the LEDs following a coupling of the capacitive type causes the onset of discharges which can damage the same LEDs in a more or less serious manner.

In some cases, for example, the damage caused by the electrostatic discharges can be slight and the LED could only be subject to a partial decrease of its own light intensity without particular effects on the other LEDs which define the module, at least initially. In other cases, instead, the damage caused by electrostatic discharges could be greater and such as to cause the total interruption of light emission of the LED and/or the breakage of the output stage of the power supply. In this case, the other optional LEDs of the module would also not be able to emit the light beam even if not damaged by the electrostatic charge.

This phenomenon has a greater tendency to appear on the inputting of the network power supply which determines a redistribution of electrical charges in the capacitive couplings.

The following are comments on the documents which emerged from the European search.

US 2011/0133660 A1 relates to a particular embodiment of an LED lighting system with AC power wherein in the case of interruption of the neutral the LED diodes constituting a chain in series are involved by a reverse voltage which causes a reverse current which closes via the substrate capacitances causing breakage thereof.

US 4,764,684 relates to a filter device which can be used in a generic static converter in order to reduce the high-frequency electromagnetic compatibility disturbances produced.

US 2012/0044669 A1 relates to the methods of construction of modules for LED, light source device, liquid crystal display.

US 2012/250310 A1 relates to the methods of construction and of assembly of an LED module.

None of the above documents relate to the present invention.

The object of the present invention is that of avoiding the disadvantages of the prior art.

More particularly the object of the present invention is that of providing a device for protection against electrostatic discharges for LED modules to be applied to an LED lighting apparatus and suitable for allowing a limitation of the quantity of electrostatic charges accumulated such as not to stress the LEDs and the connected stages of the power supply of the same LEDs, while maintaining at the same time the isolation requested by the current regulations.

A further object of the present invention is that of providing a device for protection against electrostatic discharges suitable for being applied to different types of power supplies for LED modules and such as not to require the use of power supplies or LED modules made ad hoc.

A further object is to make available to users a device for protection against electrostatic discharges for LED modules suitable for ensuring a high level of resistance and reliability in time and which, moreover, can be easily and economically produced.

These and other objects are achieved by the invention which has the features as claimed in the independent claim 1.

According to the invention an LED lighting apparatus is defined without earthing connection and having a metal surface, comprising an LED power supply with a primary circuit connected to the network insulated galvanically by a secondary circuit for the supply of at least one LED module associated to a heat sink, characterised in that it comprises a device for protection against electrostatic discharges suitable for allowing the dispersion of electrostatic charge that can accumulate on said metal surface of the lighting apparatus and/or on said heat sink, said device being placed between said LED power supply and said at least one LED module of said lighting apparatus, and comprising at least one capacitor (C_{A}, C_{B}), for each output of the power supply connected, on one side, to the output of the power supply and, on the other side, to the heat sink or to said metal surface of the lighting apparatus.

Advantageous embodiments of the invention are disclosed by the dependent claims.

The constructional and functional features of the lighting apparatus with device for protection against electrostatic discharges for LED modules of the present invention will be made clearer by the following detailed description, wherein reference is made to the accompanying drawings which illustrate a non-limiting preferred embodiment thereof, in which:

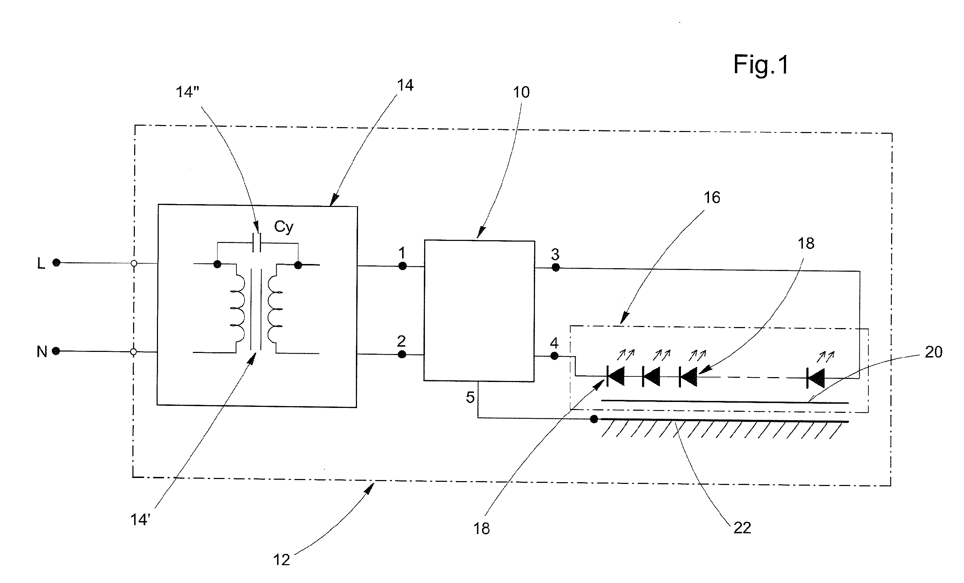

Figure 1 shows a circuit diagram of a lighting apparatus with LED lighting device provided with the device for protection against electrostatic discharges for LED modules of the present invention;
Figures 2 to 4 show different configurations of embodiment of the device for protection against electrostatic discharges of the invention.

Referring to the aforesaid drawings, the device for protection against electrostatic discharges for LED modules of the present invention, denoted overall by 10 in the drawings, is suitable for being applied to an LED lighting apparatus 12 which has a containment casing with a metal surface and is without earthing connection. The lighting apparatus comprises an LED power supply 14 connected to the network of distribution of electrical current by means of a line wire L and a neutral N and an LED module 16 defined by a plurality of LEDs 18 provided with insulation 20 of the galvanic type with respect to the heat dissipation surface.

Also associated to the LED module 16 is a heat sink 22 which can be defined by a sink separated from the aforesaid module or integrated therewith.

The power supply 14 is defined by a circuit which comprises, basically, a transformer 14' and a capacitor 14" normally connected between primary and secondary of the transformer, galvanically insulated one in relation to the other, in order to observe the limits of emission provided by the EMC (Electromagnetic Compatibility) standards. In the drawing the capacitor is identified by the reference Cy.

The device for protection against electrostatic discharges 10 of the invention is placed between the output of the power supply 14 and the input of the LED module 16.

More particularly said protection device 10 is connected to the output of the power supply 14 by means of input feet 1 and 2 and to the LED module 16 by means of the output feet 3 and 4.

Moreover the same device is connected electrically to the heat sink 22 by means of the further foot 5.

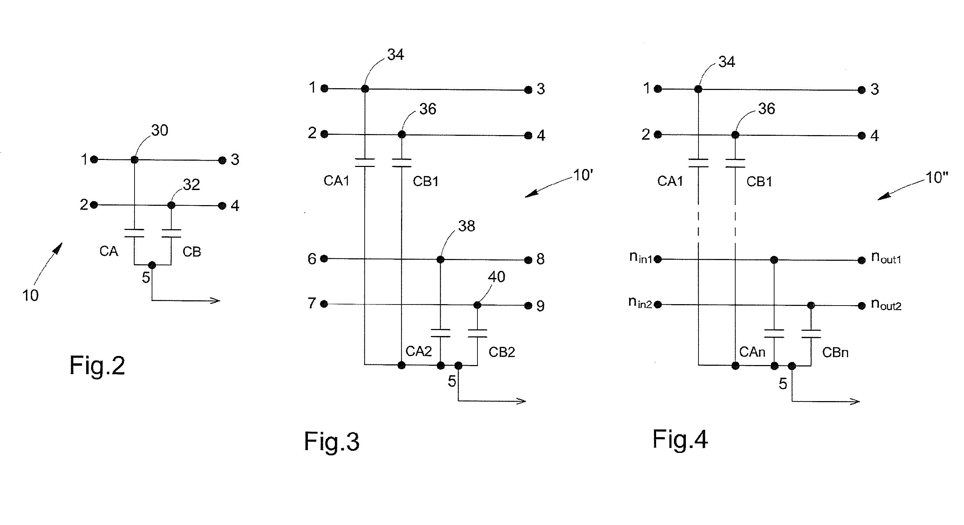

According to a preferred embodiment, schematised in Figure 2, the device for protection against electrostatic discharges comprises a pair of capacitors C_{A} and C_{B}) connected, on one side, to the outputs of the power supply 14 by means of connection feet 30 and 32 and, on the other side, to the heat sink (22) or to the metal surface of the lighting apparatus in a direct way or with a rigid or flexible conductor or a track on printed circuit.

In the case of power supplies with several outputs, suitable for supplying various LED modules positioned on independent heat sinks, several protection devices 10 can be used, each one associated to an output of the power supply and to the heat sink of the corresponding LED module.

Referring to Figures 3 and 4, examples are schematised of circuit diagrams of a device 10' and 10" for protection against electrostatic discharges according to the invention to be used, respectively, in the case of a power supply 14 with two outputs and with multiple outputs higher than two that supply LED modules positioned on a single heat sink element.

The device for protection 10', which can be used in the case of an LED power supply with two outputs, comprises a first pair of capacitors C_{A1} and C_{B1} connected with a first pair of outputs 1 and 2 of the power supply (by means of feet 34 and 36) and a second pair of capacitors C_{A2} and C_{B2} which, in turn, are connected to a second pair of outputs 6 and 7 of the same power supply (through feet 38 and 40); said first pair of capacitors and second pair of capacitors are connected to the heat sink directly or by means of a rigid or flexible conductor via a foot 5.

The device for protection 10' is connected with its pairs of outputs (3 and 4, 8 and 9) to two LED modules (not shown in the drawing).

The device for protection 10", schematised in Figure 4, can be used in the case of a power supply with multiple outputs which comprises a first pair of capacitors C_{A1} and C_{B1} connected with a first pair of outputs of the power supply and two or more further pairs of capacitors C_{An} and C_{Bn} (with n variable as a function of the outputs of the power supply and/or of the LED modules) placed in a cascade and, in turn, each one connected to the further single pairs of outputs of the power supply n_{IN1} and n_{In2}; said pairs of capacitors are moreover connected to the heat sink 22 directly or by means of a rigid or flexible conductor.

The device 10" has, moreover, n pairs of outputs for the connection with the n LED modules (outputs 3 and 4, n_{OUT1} and n_{OUT2}).

A brief description is now given of the functioning of the device for protection against electrostatic discharges of the invention.

On inputting of the electrical distribution network (via the connections defined by the line wire L and the neutral N), a pulse transfer of electrical charge could be triggered which involves a circuit path defined by the heat sink of the LEDs, by the LEDs, from the output stage of the power supply (and from the capacitor 14" comprised therein) and from the input stage of the power supply and such as to cause the damaging of the LEDs of the module 16 and/or the damaging of the interposed stages of the power supply (in particular the output stages).

The device 10 of the invention, placed between the power supply 14 and the LED modules 16, has the function of limiting the quantity of electrostatic energy in such a way as not to stress the LEDs 18 and/or the stages of the power supply 14.

More particularly the energy is conveyed along a circuit path, predetermined and defined by the heat sink, by the two capacitors C_{A} and C_{B}, by the capacitor 14" of the power supply 14 and by the power supply network, without going to influence the LEDs 18.

The type and the capacity of the pair of capacitors of the device for protection against electrostatic discharges should be chosen in such a way as to ensure the safety conditions of the circuit existing prior to the introduction of the device of the invention, with particular reference to the insulation regulations.

Although in the preceding description there is mention of pair of capacitors C_{A} and C_{B}, the inventors have noted that the protection against the electrostatic discharges can be obtained with only one of these capacitors, appropriately connected when the configuration of the LED power supply is known.

In an alternative embodiment the device for protection against electrostatic discharges of the invention is integrated in the power supply 14 and uses an auxiliary connection for the electrical connection with respect to the heat sink 22.

In another alternative embodiment the device for protection against electrostatic discharges of the invention is integrated in the LED module 16 and uses an auxiliary connection for the electrical connection with respect to the heat sink 22.

Moreover, according to a further alternative embodiment, components of the varistors and/or resistors and/or gas dischargers and/or semiconductors type, appropriately dimensioned, can be connected to the single pairs of capacitors of the device for the protection against electrostatic discharges of the invention or can be used in place and/or integration of said pairs of capacitors.

As can be seen from the above the advantages that the device of the invention achieves are clear.

The device for protection against electrostatic discharges for LED modules of the present invention allows advantageously, maintaining the safety requirements of the system, the management of the quantity of electrostatic energy accumulated in the lighting apparatus in such a way as not to stress the LEDs and the connected stages of the power supply of the same LEDs.

Further advantageous is the fact that the device of the invention can be applied to different types of power supplies for LED modules (also with multiple outputs) and does not require the use of power supplies or LED modules made ad hoc.

Although the invention has been described above with particular reference to its methods of manufacture given only by way of a non-limiting example, numerous changes and variations will appear clear to a person skilled in the art in light of what is disclosed above. The present invention therefore intends to embrace all the changes and variations which come within the scope of the following claims.

## Claims

1. An LED (Light Emitting Diode) lighting apparatus (12), without earthing connection and having a metal surface, comprising an LED power supply (14) with a primary circuit connected to the network insulated galvanically by a secondary circuit for the supply of at least one LED module (16) associated to a heat sink (22), **characterised in that** it comprises a device (10, 10', 10") for protection against electrostatic discharges suitable for allowing the dispersion of electrostatic charge that can accumulate on said metal surface of the lighting apparatus and/or on said heat sink (22), said device being placed between said LED power supply (14) and said at least one LED module (16) of said lighting apparatus, and comprising at least one capacitor (C_{A}, C_{B}), for each output of the power supply connected, on one side, to the output of the power supply (14) and, on the other side, to the heat sink (22) or to said metal surface of the lighting apparatus.

2. Lighting apparatus according to claim 1, **characterised in that** said device for protection against electrostatic discharges is connected to at least one output of the LED power supply (14), to at least one LED module (16) and to the heat sink (22) or to said metal surface of the lighting apparatus.

3. Lighting apparatus according to claim 1 or 2, **characterised in that** the device for protection against electrostatic discharges comprises a pair of capacitors (C_{A}, C_{B}) for each output of the power supply connected, on one side, to the outputs of the power supply (14) and, on the other side, to the heat sink (22) or to said metal surface of the lighting apparatus.

4. Lighting apparatus according to any one of the preceding claims, **characterised in that** said at least one capacitor of the device for protection (10) is connected electrically to the LED power supply (14), to said at least one LED module (16) and to the heat sink (22) or to said metal surface of the lighting apparatus by means of a rigid or flexible conductor or via a track on printed circuit.

5. Lighting apparatus according to any one of the preceding claims, **characterised in that** said device (10) for protection against electrostatic discharges comprises varistors and/or resistors and/or gas dischargers and/or semiconductors operating in conjunction or alternatively to said capacitors.

6. Lighting apparatus according to any one of the preceding claims, **characterised in that** the device (10) for protection against electrostatic discharges is integrated in the power supply (14) and uses an auxiliary connection for the electrical connection to the heat sink (22) or to said metal surface of the lighting apparatus.

7. Lighting apparatus according to any one of the preceding claims, **characterised in that** the device (10) for protection against electrostatic discharges is integrated in the LED module (16) and uses an auxiliary connection for the electrical connection to the heat sink (22) or to said metal surface of the lighting apparatus.

8. Device (10, 10', 10") for protection against electrostatic discharges having the features of at least one of the preceding claims, suitable for being applied to an LED lighting apparatus (12) for allowing the dispersion of electrostatic charge that can accumulate on the metal surface of said lighting apparatus and/or on a heat sink (22) associated to said LED module (16).

9. Device (10, 10', 10") for protection against electrostatic discharges having the features of at least one of the preceding claims, suitable for being integrated inside a power supply for LED (14) used inside an LED lighting apparatus (12) for allowing the dispersion of electrostatic charge that can accumulate on the metal surface of said lighting apparatus and/or on a heat sink (22) associated to said LED module (16).

10. Device (10, 10', 10") for protection against electrostatic discharges having the features of at least one of the preceding claims, suitable for being integrated in an LED module (16) used inside an LED lighting apparatus (12) for allowing the dispersion of electrostatic charge that can accumulate on the metal surface of said lighting apparatus and/or on a heat sink (22) associated to said LED module (16).

11. Device (10, 10', 10") for protection against electrostatic discharges having the features of at least one of the preceding claims, while at the same time maintaining the safety/insulation requirements of the system.
